# EUROPEAN PATENT APPLICATION

(11) **EP 4 618 355 A1**
(43) Date of publication of application: **17.09.2025**
(21) Application number: 23887911.8
(22) Date of filing: 02.11.2023
(51) Int. Cl.: H02J 7/00

(54) **CHARGING SELF-MONITORING METHOD AND APPARATUS, CHARGING PILE AND CHARGING ROBOT**

(30) Priority: 07.11.2022 CN 202211386912
(71) Applicant: BEIJING YOUZHUJU NETWORK TECHNOLOGY CO. LTD., Beijing 101299 (CN)
(72) Inventor: WANG, Tao, Beijing 100028 (CN); LI, Fuxuan, Beijing 100028 (CN)
(74) Representative: Grünecker Patent- und Rechtsanwälte PartG mbB
(86) International application number: PCT/CN2023/129388
(87) International publication number: WO 2024/099221

(57) **Abstract**

The present application discloses a method and an apparatus for charging self-monitoring, a charging pile and a charging robot. The method for charging self-monitoring includes: S1, obtaining a relative position of a charging robot with respect to a charging pile and adjusting a position of the charging robot according to the relative position until charging contacts between the charging robot and the charging pile are in position; S2, obtaining identity information, performing impedance detection on the charging contacts, and determining the identity information based on an impedance detection result; and S3, starting charging. In the solution of the present application, by using in-place detection to determine that the charging contacts between the charging robot and the charging pile are in position, it is possible to ensure contact reliability of the charging contacts during charging, so as to avoid a spark phenomenon caused by point contact between the charging contacts and improve charging safety. By means of identity verification detection, the impedance detection result of the charging contacts is used as the identity information, such that verification speed is high, and the charging robot is charged by means of the matching charging pile, thereby avoiding internal components of the charging robot from being damaged due to charging by mistake and reducing a probability of damage.

## Description

This application claims priority to Chinese Invention Patent Application No. 2022113869128, filed on November 7, 2022, and entitled "METHOD AND APPARATUS FOR CHARGING SELF-MONITORING, CHARGING PILE, AND CHARGING ROBOT", which is incorporated herein by reference in its entirety.

### FIELD

The present application belongs to the technical field of robots, and more particularly to a method for charging self-monitoring, an apparatus for charging self-monitoring, a charging pile, and a charging robot.

### BACKGROUND

A common mobile robot is automatically charged after it moves to a charging pile and its contacts are in conduction.

Usually, after a robot moves to a charging pile, a posture of the robot relative to the charging pile has a slight error, and contacts of the robot and the charging pile are in point contact, which easily leads to poor contact or electrical sparking.

Although the charging pile further performs identity verification before starting charging the robot, a conventional verification method is network communication verification between the charging pile and the robot. The network communication verification involves a process of transmitting and receiving wireless signals, and network delay is inevitably caused, resulting in delayed identity verification.

Therefore, some robots start to be charged during the network delay. If the robot does not match the charging pile, an output voltage of the charging pile may probably damage a circuit structure of the robot, causing unnecessary losses.

### SUMMARY

The present application is intended to solve at least one of the technical problems existing in the prior art, to improve recognition timeliness and accuracy between a charging robot and a charging pile.

According to a method for charging self-monitoring of a first aspect of the present application, the method includes:
S1, obtaining a relative position of the charging robot with respect to the charging pile and adjusting a position of the charging robot according to the relative position until charging contacts between the charging robot and the charging pile are in position;
S2, obtaining identity information, performing impedance detection on the charging contacts, and determining the identity information based on an impedance detection result; and
S3, starting the charging.

According to an apparatus for charging self-monitoring of a second aspect of the present application, the apparatus includes: a position detection module, configured to obtain a relative position of the charging robot with respect to the charging pile; a contact judgment module, configured to detect whether charging contacts between the charging robot and the charging pile are in position; and an identity verification module, configured to perform impedance detection on the charging contacts docked between the charging robot and the charging pile, and obtain an impedance detection result to determine identity information.

According to a charging pile of a third aspect of the present application, the apparatus for charging self-monitoring according to the second aspect of the present application is disposed on the charging pile.

According to a charging robot of a fourth aspect of the present application, the apparatus for charging self-monitoring according to the second aspect of the present application is disposed on the charging robot.

According to a computer-readable storage medium of a fifth aspect of the present application, a computer program is stored on the computer-readable storage medium, and the computer program, when executed by a processor, implements the method according to the above-mentioned embodiments.

According to a computer program product of a sixth aspect of the present application, the computer program product includes a computer program/instruction, and the computer program/instruction, when executed by a processor, implements the charging self-monitoring method according to the first aspect of the present application.

According to an electronic device of a seventh aspect of the present application, the electronic device includes: a processor; and a memory, configured to store an executable instruction of the processor; where the processor is configured to implement the method according to the above-mentioned embodiments by executing the executable instruction.

In the solution of the present application, by using in-place detection to determine that the charging contacts between the charging robot and the charging pile are in position, it is possible to ensure contact reliability of the charging contacts during charging, so as to avoid a spark phenomenon caused by point contact between the charging contacts and improve charging safety. By means of identity verification detection, the impedance detection result of the charging contacts is used as the identity information, such that verification speed is high, and the charging robot is charged by means of the matching charging pile, thereby avoiding internal components of the charging robot from being damaged due to charging by mistake and reducing a probability of damage.

Additional aspects and advantages of the present application will be set forth in part in the following description, and in part will be obvious from the following description, or may be learned by practice of the present application.

### BRIEF DESCRIPTION OF THE DRAWINGS

The above and/or additional aspects and advantages of the present application will become apparent and easy to understand from the following description of the embodiments in conjunction with the drawings, in which:
FIG. 1 is a schematic flowchart of a method for charging self-monitoring according to embodiments of the present application;
FIG. 2 is a schematic diagram of a charging pile and a charging robot being away from each other according to an embodiment of the present application;
FIG. 3 is a schematic diagram of a charging pile and a charging robot being in contact according to an embodiment of the present application;
FIG. 4 is a schematic diagram of a charging pile and a charging robot being in position according to an embodiment of the present application;
FIG. 5 is an exploded view of a charging pile according to an embodiment of the present application;
FIG. 6 is a schematic diagram of a self-monitoring algorithm for a charging voltage during charging according to an embodiment of the present application;
FIG. 7 is a block diagram of a circuit hardware design of a detection circuit according to an embodiment of the present application;
FIG. 8 is a structural diagram of an apparatus for charging self-monitoring according to an embodiment of the present application; and
FIG. 9 is a schematic structural diagram of an electronic device according to an embodiment of the present application.

Reference numerals:
charging apparatus 100, charging pile 100a, charging robot 100b,
charging contacts 2, elastic member 3,
power supply voltage U0, adjustment voltage Ut, first adjustment voltage Ut1, second adjustment voltage Ut2, third adjustment voltage Ut3, sampling voltage UA, charging voltage UB,
apparatus 50 for charging self-monitoring, position detection module 51, identity verification module 52, pre-charging module 53, charging self-adjustment module 54, contact judgment module 55,
memory 404, processor 402, transceiver 403,
detection circuit 6, control unit 601, infrared distance sensor 602, communication module 603, transformer 604, charging power supply 605, LED light 606, power switch 607, voltage divider circuit 608, sampling resistor 609, Hall sensor 610, thermistor 611, first transformer 612, second transformer 613.

### DETAILED DESCRIPTION OF EMBODIMENTS

Embodiments of the present application are described in detail below, examples of which are shown in the drawings, and the same or similar reference numerals throughout refer to the same or similar elements or elements having the same or similar functions. The embodiments described below with reference to the drawings are exemplary and are only used to explain the present application, but not to be understood as a limitation of the present application.

A method for charging self-monitoring according to embodiments of a first aspect of the present application is described below with reference to the drawings.

It may be understood that with the improvement of people's living standards year by year, a charging robot 100b such as a sweeping robot, a pet robot, and an autonomous vehicle is increasingly widely used in daily life. The charging robot 100b needs to be charged after being used for a period of time. The problems here are: whether the contacts of the charging robot 100b and the charging pile 100a found by the charging robot 100b are in place when being docked, whether the charging pile 100a found by the charging robot 100b matches the charging robot 100b, and whether it is safe for the charging robots 100b to be charged after the charging robot 100b is docked with the matching charging pile 100a. Here, the charging pile 100a and the charging robot 100b may be collectively referred to as a charging device 100.

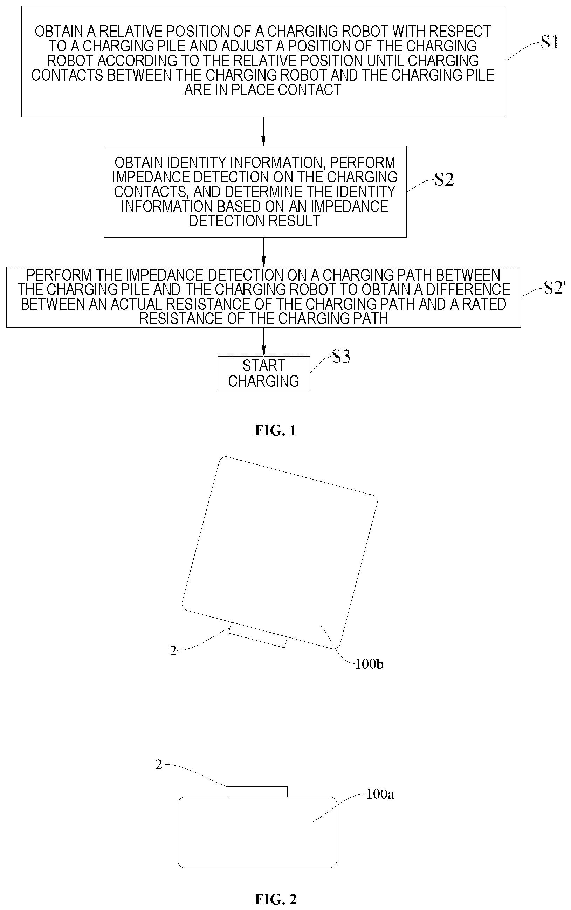

In order to solve at least some of the above-mentioned problems, the present application provides a method for charging self-monitoring, and referring to FIG. 1, the method includes the following steps.

At step S1, a relative position of the charging robot 100b with respect to the charging pile 100a is obtained, and a position of the charging robot 100b is adjusted according to the relative position until charging contacts 2 between the charging robot 100b and the charging pile 100a are in position. A detection process in the step S1 may be referred to as in-place detection.

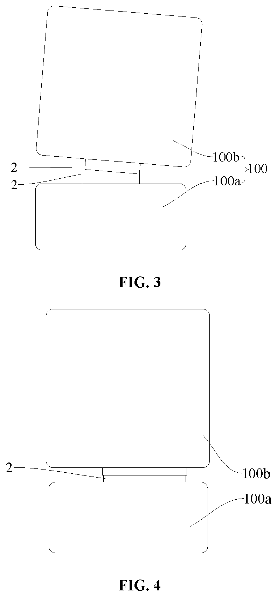

As shown in FIG. 2 to FIG. 3, when the charging robot 100b needs to be charged, the charging robot 100b moves towards the charging pile 100a, and the charging contacts 2 of the charging robot 100b and the charging contacts 2 of the charging pile 100a gradually approach each other. Since the charging robot 100b automatically performs a process of finding and positioning, an error in a posture of the charging robot 100b relative to the charging pile 100a may be inevitable, resulting in point contact between the charging contacts 2 of the charging robot 100b and the charging contacts 2 of the charging pile 100a, as shown in FIG. 3.

Therefore, the step S1 of the method for charging self-monitoring of the present application proposes that in-place detection is performed simultaneously during a process of self-adjusting the position of the charging robot 100b relative to the charging pile 100a. When the charging contacts 2 between the charging robot 100b and the charging pile 100a are in position, the charging contacts 2 are usually in a surface contact state, a contact area is large, and no great resistance is generated at the charging contacts 2, such that current is smoothly conducted.

In the present application, a determination condition for the in-place detection of the charging contacts 2 between the charging robot 100b and the charging pile 100a may be a distance condition, or may be the distance condition in combination with other conditions. For example, in the example shown in FIG. 4, the charging contacts 2 of the charging robot 100b and the charging contacts 2 of the charging pile 100a are parallel to and in surface contact with each other, such that the charging contacts 2 between the charging robot 100b and the charging pile 100a are in position, and the charging robot 100b and the charging pile 100a are in conduction with each other through the charging contacts 2.

In some embodiments, the charging robot 100b moves towards the charging pile 100a according to a result of a navigation algorithm. After the charging robot 100b and the charging pile 100a get close to each other, the navigation algorithm is insufficient in accuracy due to a relatively small distance. In this case, a distance sensor is needed to complete the in-place detection in the step S1. Optionally, the distance sensor may be an optical distance sensor, an infrared distance sensor 609, or the like, which is not limited here.

The distance sensor is configured to measure a distance between selected positions on the charging pile 100a and the charging robot 100b, and determine a parameter such as a parallelism between the charging pile 100a and the charging robot 100b.

In some specific embodiments, when a distance sensor is used to detect a distance between the charging pile 100a and the charging robot 100b, it is necessary to perform debounce processing on the obtained distance value. It should be noted that a method for performing debounce processing on the distance value is prior art, and will not be repeated here.

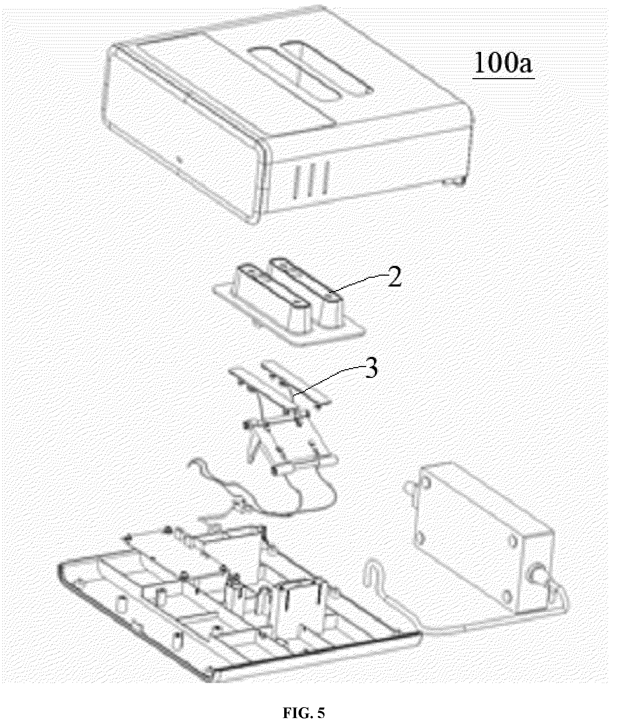

Specifically, as shown in FIG. 5, an elastic member 3 is arranged at the charging contacts 2 of the charging pile 100a to keep the charging contacts 2 in a protruded state. In this way, after the charging contacts 2 of the charging pile 100a are in contact with the charging contacts 2 of the charging robot 100b, the elastic member 3 pushes the charging contacts 2 of the charging pile 100a towards the charging contacts 2 of the charging robot 100b, which is beneficial to full contact between the two charging contacts 2, and the contact reliability is high. When the elastic member 3 is arranged, and when the charging contacts 2 of the charging pile 100a are in contact with the charging contacts 2 of the charging robot 100b, an elastic force will also affect the distance between the charging pile 100a and the charging robot 100b. The measured distance value may have a fluctuation slightly at the moment of contact, and the distance value during the fluctuation is likely to lead to a judgment error of the in-place detection. Therefore, the debounce processing is performed to obtain a distance value when the distance between the charging pile 100a and the charging robot 100b is stable, and this distance value is used as a judgment basis for the in-place detection, such that the in-place detection may be more accurate.

Here, the elastic member 3 may also be arranged at the charging contacts 2 of the charging robot 100b, or the elastic member 3 is arranged at the charging contacts 2 of the charging pile 100a and the charging contacts 2 of the charging robot 100b.

Further, when it is determined whether the charging contacts 2 between the charging robot 100b and the charging pile 100a are in position by detecting the distance, a compression amount needs to be reserved. For example, a compression amount of the charging contacts 2 of the charging robot 100b is 5mm, and a compression amount of the charging contacts 2 of the charging pile 100a is also 5mm. When a spacing between the charging pile 100a and the charging robot 100b is 15mm, the charging contacts 2 of the charging pile 100a and the charging contacts 2 of the charging robot 100b are parallel to and in contact with each other, and in this case, it may be determined that the charging contacts 2 are in position. When the spacing between the charging pile 100a and the charging robot 100b is 5mm, the charging contacts 2 of the charging pile 100a and the charging contacts 2 of the charging robot 100b are parallel to and in contact with each other, and in this case, it may also be determined that the charging contacts 2 are in position. A compression amount of 10mm is reserved between 15mm and 5mm. Therefore, when the spacing between the charging pile 100a and the charging robot 100b is 5mm to 15mm, and the charging contacts 2 of the charging pile 100a and the charging contacts 2 of the charging robot 100b are parallel to and in contact with each other, it may be determined that the charging contacts 2 are in position.

When the step S1 is satisfied between the charging robot 100b and the charging pile 100a, that is, the charging contacts 2 are in position, the charging robot 100b may be locked to keep it in a stable state in subsequent steps. In this way, it is less likely to cause a spark phenomenon after the charging robot 100b and the charging pile 100a are electrified, thereby improving safety.

At block S2, identity information is obtained, impedance detection is performed on the charging contacts 2, and the identity information is determined based on an impedance detection result.

It is well known to those skilled in the art that a conventional identity verification method between the robot and the charging pile is network communication verification. Both the robot and the charging pile are provided with communication circuits, and identity information codes are sent to each other by means of wireless communication. The wireless communication method often has a delay of 500ms due to network delay, resulting in delayed identity verification, and even the charging devices may not be identified.

In the present application, by performing the step S1, the charging contacts 2 between the charging robot 100b and the charging pile 100a are in position, and in this case, the impedance detection may be performed by using the charging contacts 2 of the charging robot 100b and the charging pile 100a. In this way, the manner of determining the identity information by obtaining the impedance detection result is not only fast in verification speed, but also not prone to interference by external signals, thereby improving anti-interference ability, as compared with a manner of verifying identity information by means of network communication.

A parameter selected for performing the impedance detection on the charging contacts 2 here is very flexible. For example, a voltage and a current of the charging contacts 2 may be directly detected, and a resistance value of the charging contacts 2 may be calculated and obtained as the impedance detection result, and the resistance value may be directly used as the identity information. For another example, by setting the detection circuit 6 connected to the charging contacts 2, a resistance value of a component in the detection circuit 6 is obtained by a voltage value or a current value of the component, and the resistance value of the component may also be used as the impedance detection result. Since the charging contacts 2 have a certain resistivity, the charging contacts 2 will become a part of the detection circuit 6 after being connected to the detection circuit 6. Therefore, the voltage value or the current value of the component in the detection circuit 6 may also indirectly reflect the voltage and current information of the charging contacts 2, and the resistance value of the component may also be used as the identity information.

The identity information is determined by using the impedance detection result of the charging contacts 2. During production, a manufacturer may configure a same impedance detection result for a universal charging apparatus 100. For example, sweeping robots of a same model have a same impedance detection result, and a same charging pile 100a may be configured for the sweeping robots of the same model. When a same manufacturer produces a series of products, such as sweeping robots, mobile air processors (humidifiers, purifiers), etc., one charging pile 100a may be configured, thereby reducing the number of charging piles 100a.

In some specific embodiments, a charging path between the charging pile 100a and the charging robot 100b is connected to the detection circuit 6 for charging self-monitoring. The charging path is a circuit path from a power supply in the charging pile 100a to a storage battery in the charging robot 100b when the charging pile 100a charges the charging robot 100b.

The detection circuit 6 is a circuit structure in the charging apparatus 100 for adjustment and detection. The detection circuit 6 includes a voltage transformation structure and a detection structure, the voltage transformation structure is a transformer from the power supply to the storage battery, and the voltage transformation structure is configured to adjust a power supply voltage U0 to an adjustment voltage Ut, and then apply the adjustment voltage Ut to the detection structure. The voltage transformation structure of the detection circuit 6 and its working principle are prior art, and will not be repeated here.

It may be understood that the power supply voltage U0 of the charging pile 100a is a determined value, for example, the power supply voltage U0 of the charging apparatus 100 for home use is an alternating current of the voltage of 220V. The voltage transformation structure is configured to convert an alternating current into a direct current and reduce a voltage, and therefore the adjustment voltage Ut adjusted by the voltage transformation structure is also a determined value, for example, the adjustment voltage Ut is 30V. The detection structure is connected to the charging path, and a detection result of the detection structure varies with the adjustment voltage Ut and a resistance of the charging path.

The detection circuit 6 may be arranged in the charging pile 100a, and only a storage battery is arranged in the charging robot 100b. When the charging contacts 2 between the charging robot 100b and the charging pile 100a are in position, a power supply in the charging pile 100a is connected to the detection circuit 6 and the charging path, such that an electrical connection voltage of the charging contacts 2 of the charging pile 100a may be adjusted to a voltage value required for charging the storage battery through adjustment by the detection circuit 6. The detection circuit 6 may also be arranged in the charging robot 100b, and only a power supply is arranged in the charging pile 100a. When the charging contacts 2 between the charging robot 100b and the charging pile 100a are in position, the electrical connection voltage of the charging contacts 2 of the charging pile 100a is directly the power supply voltage U0, and after the electrical connection voltage enters the charging robot 100b, the electrical connection voltage is adjusted by the detection circuit 6, such that the storage battery obtains a voltage value required for charging.

In some specific embodiments of the present application, the detection structure includes the sampling resistor 609 connected in series with the charging path. Since a resistance change amplitude of the sampling resistor 609 is small, after the sampling resistor 609 is connected in series with the charging path, a distribution proportion of the voltage of the two is consistent with a distribution proportion of the resistance value of the two. For ease of description, a voltage distributed on the sampling resistor 609 is referred to as a sampling voltage UA here, while a voltage distributed on the charging path is referred to as a charging voltage UB.

In some specific embodiments, the first adjustment voltage Ut1 is output to the detection circuit 6, the resistance value of the sampling resistor 609 in the detection circuit 6 is obtained, and the identity information is determined. That is, after the first adjustment voltage Ut1 is output to the detection circuit 6, a voltage value distributed on the sampling resistor 609 is a first sampling voltage UA1, and the resistance value of the sampling resistor 609 is obtained by dividing the first sampling voltage UA1 by a current value of the sampling resistor 609. The resistance value of the sampling resistor 609 is relatively stable, and the sampling resistor 609 belongs to a part of the detection circuit 6. The circuit for performing the impedance detection on the charging contacts 2 is the detection circuit 6, and an impedance detection result includes the resistance value of the sampling resistor 609, such that the resistance value may be selected as the identity information. Since the resistance value of the sampling resistor 609 is relatively fixed and not affected by an external environment, by determining the resistance value as the identity information, the reliability is high and the service life is long.

Optionally, when the resistance value of the sampling resistor 609 obtained by calculation differs from a rated value of the sampling resistor 609 by less than 10%, it may be determined that the obtained identity information is matched.

Certainly, the parameter as the identity information in the present application may not be limited to the resistance value of the sampling resistor 609, and other parameters that may be maintained unchanged for a long time may also be used, which is not limited here.

It should be noted that the detection circuit 6 includes the voltage transformation structure and the detection structure, the voltage transformation structure is a transformer from the power supply to the storage battery, and the voltage transformation structure is configured to adjust the power supply voltage U0 to the adjustment voltage Ut, and then apply the adjustment voltage Ut to the detection structure. In this case, the first adjustment voltage Ut1 output to the detection circuit 6 mentioned in the present disclosure refers to the voltage output to the detection structure of the detection circuit 6 being the first adjustment voltage Ut1. The second adjustment voltage Ut2 and the third adjustment voltage Ut3 mentioned below refer to the second adjustment voltage Ut2 and the third adjustment voltage Ut3 output to the detection structure of the detection circuit 6.

S3, charging is started. That is, charging may be performed after the in-place detection and the identity verification detection are completed.

According to the method for charging self-monitoring of the first aspect of the present application, in-place detection is performed with the step S1, and it is determined that the charging contacts 2 between the charging robot 100b and the charging pile 100a are in position, such that it is possible to ensure contact reliability of the charging contacts 2 during charging, so as to avoid a spark phenomenon caused by point contact of the charging contacts 2 and improve charging safety. The identity verification detection is performed through the setting of the step S2, and the identity information is determined with the impedance detection result of the charging contacts 2, such that verification speed is high, and the charging robot 100b is charged by means of the matching charging pile 100a, thereby avoiding internal components of the charging robot 100b from being damaged due to charging by mistake and reducing a probability of damage.

In some embodiments of the present application, the method for charging self-monitoring further includes a step S2' between the step S2 and the step S3. In the step S2', impedance detection is performed on a charging path between the charging pile 100a and the charging robot 100b to obtain a difference between an actual resistance of the charging path and a rated resistance of the charging path. The step S2 may be referred to as identity verification detection, and the step S2' may be referred to as pre-charging detection.

It should be noted that to perform the impedance detection on the charging path, the charging path requires to be powered on, which is equivalent to pre-charging the storage battery. At the same time, the impedance detection result of the charging path may be obtained.

By analyzing the impedance detection result of the charging path, information about whether the charging path is smooth may be obtained. Moreover, since the charging contacts 2 and the storage battery are both connected to the charging path, information about whether the charging contacts 2 and the storage battery may be normally used may also be indirectly obtained. After the parameters to be measured in the impedance detection are reasonably set, by analyzing the impedance detection result of the charging path, a state of the charging contacts 2, whether the storage battery is aged, whether the charging path is open-circuited or short-circuited, and the like may also be learned. Therefore, the provision of the step S2' may further learn the state of the charging apparatus 100 and further improve charging safety. For example, when it is analyzed that the charging path is open-circuited or short-circuited, timely maintenance may be performed.

In some specific embodiments, in the step S2', the second adjustment voltage Ut2 is output to the detection circuit 6, and a voltage difference of the charging path is calculated by using a sampling voltage measured in the detection circuit 6, to obtain a difference between the actual resistance of the charging path and the rated resistance of the charging path.

After the second adjustment voltage Ut2 is output to the detection circuit 6, a voltage value distributed on the sampling resistor 609 is a second sampling voltage UA2, and a voltage distributed on the charging path is referred to as a second charging voltage UB2. When a resistance value of the charging path is the rated resistance, the voltage distributed on the charging path should be a rated charging voltage Ube. Therefore, the difference between the actual resistance of the charging path and the rated resistance of the charging path may be calculated based on a voltage difference between the second charging voltage UB2 and the rated charging voltage Ube, thereby determining a change amplitude of the actual resistance of the charging path relative to the rated resistance of the charging path. It should be noted that the above calculation process is prior art, and will not be repeated here.

It may be understood that when the change amplitude of the actual resistance of the charging path relative to the rated resistance of the charging path is within a set range, it may be determined that the charging path is in a normal state, and in this case, the step S3 may be performed for normal charging. For example, when the change amplitude of the actual resistance of the charging path relative to the rated resistance of the charging path is 50 milliohms or less, it may be determined that the charging path is in the normal state.

When the change amplitude of the actual resistance of the charging path relative to the rated resistance of the charging path exceeds the set range, it may be determined that the charging path is in an abnormal state, and at this time, adjustment or maintenance is needed.

For example, since the charging contacts 2 belong to a part of the charging path, when the resistance of the charging contacts 2 becomes large due to oil stains and impurities on the charging contacts 2, the overall resistance of the charging path will also become large. Therefore, when an increase in the actual resistance of the charging path is detected in the step S2', the charging contacts 2 may be cleaned to ensure that the contact position is not open-circuited. For another example, when the charging path is short-circuited, the overall resistance of the charging path may become small. Therefore, when a significant reduction in the actual resistance of the charging path is detected in the step S2', a short-circuit detection needs to be performed to avoid burning out internal components.

In some specific embodiments, when the step S2 is performed, the first adjustment voltage Ut1 is output to the detection circuit 6, the first sampling voltage UA1 of the sampling resistor 609 is obtained, and the resistance value of the sampling resistor 609 is obtained as the identity information. When the step S2' is performed, the second adjustment voltage Ut2 is output to the detection circuit 6, the second sampling voltage UA2 of the sampling resistor 609 is obtained, and the difference between the actual resistance of the charging path and the rated resistance of the charging path is obtained. The first adjustment voltage Ut1 is lower than the second adjustment voltage Ut2.

It may be understood that the step S2 is used as the identity verification detection, and the relatively low first adjustment voltage Ut1 is used, such that power consumption may be saved. Moreover, when the charging pile 100a found by the charging robot 100b does not match the charging robot 100b, the relatively low first adjustment voltage Ut1 is used during identity verification, so as to avoid breakdown of internal components, and reduce the probability of damage caused by false matching.

The step S2' is used as the pre-charging detection, and the obtained second adjustment voltage Ut2 relatively high, such that the second charging voltage UB2 of the charging path is close to the rated charging voltage Ube of the charging path, such that the whole charging path is in conduction, such that a status of charging and electrifying is quickly obtained, and the detection error rate is reduced.

Further, in the step S3, the third adjustment voltage Ut3 is output to the detection circuit 6 to charge the charging robot 100b. The second adjustment voltage Ut2 output to the detection circuit 6 in the step S2' is lower than the third adjustment voltage Ut3 output to the detection circuit 6 after charging is started in the step S3. It may be understood that after charging is started, the third adjustment voltage Ut3 output to the detection circuit 6 is approximately equal to the rated charging voltage Ube. The second adjustment voltage Ut2 is relatively low, so as to save power consumption, and on the other hand, prevent damage caused by an excessively high pre-charging voltage due to a failure of the charging path.

In some embodiments, the charging contacts 2 are connected to the detection circuit 6, and after charging is started in the step S3, automatic control detection of the charging voltage UB is further performed at the same time.

For example, the step S3 may include S31: obtaining a temperature change of the charging contacts 2 and adjusting the charging voltage UB for the charging robot 100b.

For a further example, the step S3 may include S32: obtaining a current change of the detection circuit 6 and adjusting the charging voltage UB for the charging robot 100b.

For a further example, the step S3 may include S33: obtaining a voltage change of the detection circuit 6 and adjusting the charging voltage UB for the charging robot 100b.

Certainly, during automatic control detection in the charging process, two or three of a temperature of the charging contacts 2, a current of the detection circuit 6, and a voltage of the detection circuit 6 may also be obtained, so as to improve accuracy of detection and self-adjustment.

In some embodiments, the detection circuit 6 includes the voltage transformation structure and the detection structure, the voltage transformation structure is a transformer from the power supply to the storage battery. The voltage transformation structure is configured to adjust the power supply voltage U0 to the adjustment voltage Ut, and then apply the adjustment voltage Ut to the detection structure. In this case, a voltage distributed on the charging path is referred to as the charging voltage UB. Therefore, when the parameters such as the temperature of the charging contacts 2, the current of the detection circuit 6, and the voltage of the detection circuit 6 are obtained, the charging voltage UB may be changed by adjusting a transformation coefficient of the voltage transformation structure.

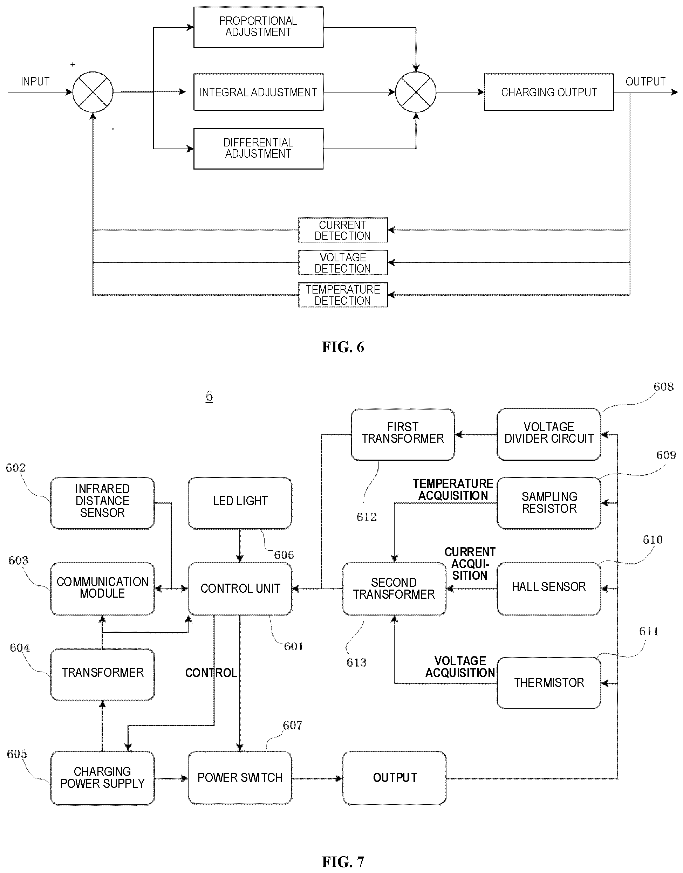

In a specific embodiment, as shown in FIG. 6, after charging is started in the step S3, current detection, voltage detection, and temperature detection are simultaneously performed, and the charging voltage for the charging robot 100b is adjusted appropriately with proportional adjustment, integral adjustment, and differential adjustment. A dynamic adjustment charging control solution based on proportional-integral-derivative (PID) enables different charging currents and voltages to be controlled in different scenarios.

FIG. 7 shows a block diagram of circuit hardware design of a detection circuit 6. Various electronic components are arranged on the detection circuit 6 for position detection, current detection, voltage detection, resistance detection, temperature detection, power management, and the like.

The detection circuit 6 includes a control unit 601. The control unit 601 is a central nerve of the detection circuit 6, and acquires signals of respective electronic components and sends instruction signals to respective electronic components.

The detection circuit 6 further includes an infrared distance sensor 602. The infrared distance sensor 602 is configured to measure a distance between selected positions on the charging pile 100a and the charging robot 100b. The infrared distance sensor 602 sends a detection result to the control unit 601, and the control unit 601 determines whether charging contacts 2 between the charging pile 100a and the charging robot 100b are in position.

The detection circuit 6 further includes a communication module 603. The communication module 603 communicates with the control unit 601. The communication module 603 may send an operating state of the charging apparatus 100 to the outside, for example, to a server to construct cloud data of the charging apparatus. Similarly, the communication module 603 may acquire information from the outside and transmit the information to the control unit 601, and acquire setting parameters or operating commands from the outside.

The detection circuit 6 further includes a transformer 604 configured to be connected to a charging power supply 605. The transformer 604 is connected to the communication module 603 and the control unit 601 for power supply. Specifically, the transformer 604 is a direct current-direct current converter (DC-DC converter). The control unit 601 is also connected to the charging power supply 605 to control an operating state of the charging power supply 605.

The detection circuit 6 further includes an LED light 606. Detection information of the LED light 606 is sent to the control unit 601.

The detection circuit 6 further includes a power switch 607. The power switch 607 is configured to control the adjustment voltage Ut output by the charging power supply 605 to the detection structure. Optionally, the power switch 607 is a PMOS transistor (positive channel Metal Oxide Semiconductor).

The detection circuit 6 further includes a voltage divider circuit 608 configured to adjust the charging voltage UB distributed to the charging path, and also to adjust a voltage distribution of the detection structure of the detection circuit 6.

The detection structure of the detection circuit 6 includes a sampling resistor 609. The sampling resistor 609 may be used to acquire a voltage.

The detection structure of the detection circuit 6 further includes a Hall sensor 610. The Hall sensor 610 is configured to detect a current of the charging path to implement current acquisition. Optionally, the Hall sensor 610 may be configured to detect a current at the charging contacts 2.

The detection structure of the detection circuit 6 further includes a thermistor 611, which is configured to detect a temperature at a certain position of the charging path, for example, a temperature at the charging contacts 2, to implement temperature acquisition. Optionally, the thermistor 611 is a thermistor with a negative temperature coefficient (NTC).

The detection structure of the detection circuit 6 further includes a first transformer 612 and a second transformer 613. The first transformer 612 is configured to convert information output by the voltage divider circuit 608 and transmit the converted information to the control unit 601, and the second transformer 613 is configured to convert information detected by the sampling resistor 609, the Hall sensor 10, and the thermistor 611, respectively, and transmit the converted information to the control unit 601.

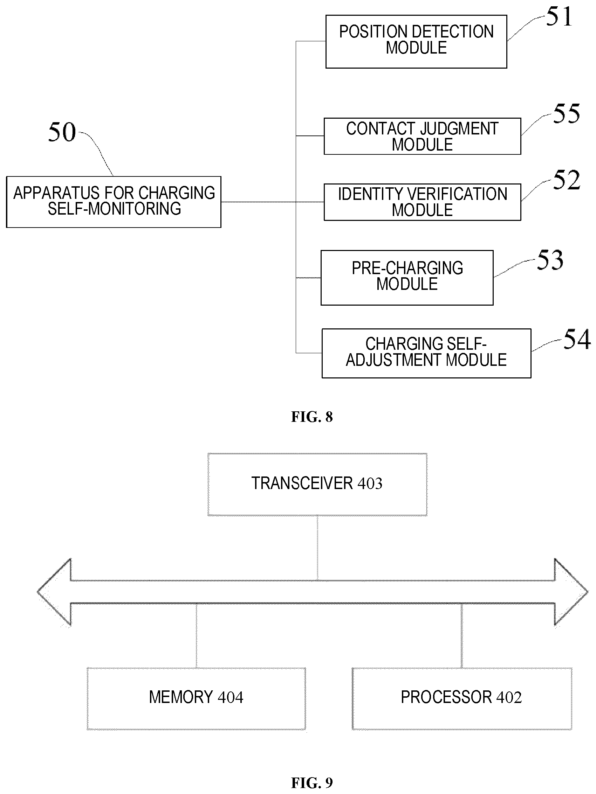

According to an embodiment of a second aspect of the present application, an apparatus 50 for charging self-monitoring, as shown in FIG. 8, includes: a position detection module 51, a contact judgment module 55, and an identity verification module 52. The position detection module 51 is configured to obtain a relative position of the charging robot 100b with respect to the charging pile 100a. The contact judgment module 55 is configured to detect whether the charging contacts 2 between the charging robot 100b and the charging pile 100a are in position. The identity verification module 52 is configured to perform impedance detection on the charging contacts 2 docked between the charging robot 100b and the charging pile 100a, and obtain an impedance detection result to determine identity information.

The position detection module 51 and the contact judgment module 55 are configured to perform in-place detection simultaneously during a process of self-adjusting the position of the charging robot 100b relative to the charging pile 100a. When the charging contacts 2 between the charging robot 100b and the charging pile 100a are in position, the charging contacts 2 are usually in a surface contact state, a contact area is large, and no great resistance is generated at the charging contacts 2, such that current is smoothly conducted.

In the example shown in FIG. 3, the charging contacts 2 of the charging robot 100b and the charging contacts 2 of the charging pile 100a are parallel to and in contact with each other, such that the charging contacts 2 between the charging robot 100b and the charging pile 100a are in position, and the charging robot 100b and the charging pile 100a are in conduction with each other through the charging contacts 2. The identity verification module 52 is configured to perform impedance detection by using the charging contacts 2 between the charging robot 100b and the charging pile 100a after the charging contacts 2 between the charging robot 100b and the charging pile 100a are in position. In this way, the manner of determining the identity information by obtaining the impedance detection result is not only fast in verification speed, but also not prone to interference by external signals, thereby improving anti-interference ability, as compared with a manner of verifying identity information by means of network communication.

According to the apparatus 50 for charging self-monitoring of the second aspect of the present application, the position detection module 51 and the contact judgment module 55 are used to perform the in-place detection, and it is determined that the charging contacts 2 between the charging robot 100b and the charging pile 100a are in position, such that it is possible to ensure contact reliability of the charging contacts 2 during charging, so as to avoid a spark phenomenon caused by point contact between the charging contacts 2 and improve charging safety. The identity verification module 52 is used to perform the identity verification detection, and the impedance detection result of the charging contacts 2 is used to determine the identity information, such that verification speed is high, and the charging robot 100b is charged by means of the matching charging pile 100a, thereby avoiding internal components of the charging robot 100b from being damaged due to charging by mistake and reducing a probability of damage.

In some embodiments, the apparatus 50 for charging self-monitoring further includes: a pre-charging module 53, configured to perform impedance detection on a charging path between the charging pile 100a and the charging robot 100b to obtain a difference between an actual resistance of the charging path and a rated resistance of the charging path.

It should be noted that to perform the impedance detection on the charging path, the charging path requires to be powered on, which is equivalent to pre-charging the storage battery. At the same time, the impedance detection result of the charging path may be obtained.

By analyzing the impedance detection result of the charging path, information about whether the charging path is smooth may be obtained. Moreover, since the charging contacts 2 and the storage battery are both connected to the charging path, information about whether the charging contacts 2 and the storage battery may be normally used may also be indirectly obtained. After the parameters to be measured in the impedance detection are reasonably set, by analyzing the impedance detection result of the charging path, a state of the charging contacts 2, whether the storage battery is aged, whether the charging path is open-circuited or short-circuited, and the like may also be learned. Therefore, the provision of the step S2' may further learn the state of the charging apparatus 100 and further improve charging safety. For example, when it is analyzed that the charging path is open-circuited or short-circuited, timely maintenance may be performed.

In some specific embodiments, a charging path between the charging pile 100a and the charging robot 100b is connected to the detection circuit 6 for charging self-monitoring. The charging path is a circuit path from a power supply in the charging pile 100a to a storage battery in the charging robot 100b when the charging pile 100a charges the charging robot 100b.

The detection circuit 6 is a circuit structure in the charging apparatus 100 for adjustment and detection. The detection circuit 6 includes a voltage transformation structure and a detection structure, the voltage transformation structure is a transformer from the power supply to the storage battery, and the voltage transformation structure is configured to adjust a power supply voltage U0 to an adjustment voltage Ut, and then apply the adjustment voltage Ut to the detection structure. The voltage transformation structure of the detection circuit 6 and its working principle are prior art, and will not be repeated here.

It may be understood that the power supply voltage U0 of the charging pile 100a is a determined value, for example, the power supply voltage U0 of the charging apparatus 100 for home use is an alternating current of the voltage of 220 V. The voltage transformation structure is configured to convert an alternating current into a direct current and reduce a voltage, and therefore the adjustment voltage Ut adjusted by the voltage transformation structure is also a determined value, for example, the adjustment voltage Ut is 30 V. The detection structure is connected to the charging path, and a detection result of the detection structure varies with the adjustment voltage Ut and a resistance of the charging path.

The detection circuit 6 may be arranged in the charging pile 100a, and only a storage battery is arranged in the charging robot 100b. When the charging contacts 2 between the charging robot 100b and the charging pile 100a are in position, a power supply in the charging pile 100a is connected to the detection circuit 6 and the charging path, such that an electrical connection voltage of the charging contacts 2 of the charging pile 100a may be adjusted to a voltage value required for charging the storage battery through adjustment by the detection circuit 6. The detection circuit 6 may also be arranged in the charging robot 100b, and only a power supply is arranged in the charging pile 100a. When the charging contacts 2 between the charging robot 100b and the charging pile 100a are in position, the electrical connection voltage of the charging contacts 2 of the charging pile 100a is directly the power supply voltage U0, and after the electrical connection voltage enters the charging robot 100b, the electrical connection voltage is adjusted by the detection circuit 6, such that the storage battery obtains a voltage value required for charging.

In some specific embodiments of the present application, the detection structure includes the sampling resistor 609 connected in series with the charging path. Since a resistance change amplitude of the sampling resistor 609 is small, after the sampling resistor 609 is connected in series with the charging path, a distribution proportion of the voltage of the two is consistent with a distribution proportion of the resistance value of the two. For ease of description, a voltage distributed on the sampling resistor 609 is referred to as a sampling voltage UA here, while a voltage distributed on the charging path is referred to as a charging voltage UB.

In some specific embodiments, the first adjustment voltage Ut1 is output to the detection circuit 6, the resistance value of the sampling resistor 609 in the detection circuit 6 is obtained, and the identity information is determined. That is, after the first adjustment voltage Ut1 is output to the detection circuit 6, a voltage value distributed on the sampling resistor 609 is a first sampling voltage UA1, and the resistance value of the sampling resistor 609 is obtained by dividing the first sampling voltage UA1 by a current value of the sampling resistor 609. The resistance value of the sampling resistor 609 is relatively stable, and the sampling resistor 609 belongs to a part of the detection circuit 6. The circuit for performing the impedance detection on the charging contacts 2 is the detection circuit 6, and an impedance detection result includes the resistance value of the sampling resistor 609, such that the resistance value may be selected as the identity information.

In some specific embodiments, the pre-charging module 53 outputs the second adjustment voltage Ut2 to the detection circuit 6, and calculates the voltage difference of the charging path by using the sampling voltage measured in the detection circuit 6, to obtain the difference between the actual resistance of the charging path and the rated resistance of the charging path.

By analyzing the impedance detection result of the charging path, information about whether the charging path is smooth may be obtained. Moreover, since the charging contacts 2 and the storage battery are both connected to the charging path, information about whether the charging contacts 2 and the storage battery may be normally used may also be indirectly obtained. After the parameters to be measured in the impedance detection are reasonably set, by analyzing the impedance detection result of the charging path, a state of the charging contacts 2, whether the storage battery is aged, whether the charging path is open-circuited or short-circuited, and the like may also be learned. Therefore, the provision of the step S2' may further learn the state of the charging apparatus 100 and further improve charging safety. For example, when it is analyzed that the charging path is open-circuited or short-circuited, timely maintenance may be performed.

In some specific embodiments, in the step S2', the second adjustment voltage Ut2 is output to the detection circuit 6, and a voltage difference of the charging path is calculated by using a sampling voltage measured in the detection circuit 6, to obtain a difference between the actual resistance of the charging path and the rated resistance of the charging path.

After the second adjustment voltage Ut2 is output to the detection circuit 6, a voltage value distributed on the sampling resistor 609 is a second sampling voltage UA2, and a voltage distributed on the charging path is referred to as a second charging voltage UB2. When a resistance value of the charging path is the rated resistance, the voltage distributed on the charging path should be a rated charging voltage Ube. Therefore, a difference between the actual resistance of the charging path and the rated resistance of the charging path may be calculated based on a voltage difference between the second charging voltage UB2 and the rated charging voltage Ube, thereby determining a change amplitude of the actual resistance of the charging path relative to the rated resistance of the charging path. It should be noted that the above calculation process is prior art, and will not be repeated here.

It may be understood that when the change amplitude of the actual resistance of the charging path relative to the rated resistance of the charging path is within a set range, it may be determined that the charging path is in a normal state, and in this case, the step S3 may be performed for normal charging. For example, when the change amplitude of the actual resistance of the charging path relative to the rated resistance of the charging path is 50milliohms or less, it may be determined that the charging path is in the normal state.

When the change amplitude of the actual resistance of the charging path relative to the rated resistance of the charging path exceeds the set range, it may be determined that the charging path is in an abnormal state. In this case, adjustment or maintenance is needed.

For example, since the charging contacts 2 belong to a part of the charging path, when the resistance of the charging contacts 2 becomes large due to oil stains and impurities on the charging contacts 2, the overall resistance of the charging path will also become large. Therefore, when an increase in the actual resistance of the charging path is detected in the step S2', the charging contacts 2 may be cleaned to ensure that the contact position is not open-circuited. For another example, when the charging path is short-circuited, the overall resistance of the charging path may become small. Therefore, when a significant reduction in the actual resistance of the charging path is detected in the step S2', a short-circuit detection needs to be performed to avoid burning out internal components.

In some specific embodiments, the identity verification module 52 outputs the first adjustment voltage Ut1 to the detection circuit 6, obtains the first sampling voltage UA1 of the sampling resistor 609, and obtains the resistance value of the sampling resistor 609 as the identity information when operating. The pre-charging module 53 outputs the second adjustment voltage Ut2 to the detection circuit 6, obtains the second sampling voltage UA2 of the sampling resistor 609, and obtains the difference between the actual resistance of the charging path and the rated resistance of the charging path when operating. The first adjustment voltage Ut1 is lower than the second adjustment voltage Ut2.

It may be understood that the identity verification module 52 operates to perform identity verification detection, and the relatively low first adjustment voltage Ut1 is used, such that power consumption may be saved. Moreover, when the charging pile 100a found by the charging robot 100b does not match the charging robot 100b, the relatively low first adjustment voltage Ut1 is used during identity verification, so as to avoid breakdown of internal components, and reduce the probability of damage caused by false matching.

The pre-charging module 53 operates to perform pre-charging detection, and obtained second adjustment voltage Ut2 is the relatively high, such that the second charging voltage UB2 of the charging path is close to the rated charging voltage Ube of the charging path, such that the whole charging path is in conduction, such that a status of charging and electrifying is quickly obtained, and the detection error rate is reduced.

Further, the second adjustment voltage Ut2 output to the detection circuit 6 when the pre-charging module 53 operates is lower than the third adjustment voltage Ut3 output to the detection circuit 6 after charging is started. It may be understood that after charging is started, the third adjustment voltage Ut3 output to the detection circuit 6 is approximately equal to the rated charging voltage Ube. The second adjustment voltage Ut2 is relatively low, so as to save power consumption, and on the other hand, prevent damage caused by an excessively high pre-charging voltage due to a failure of the charging path.

In some embodiments, the apparatus 50 for charging self-monitoring further includes a charging self-adjustment module 54, and the charging self-adjustment module 54 is configured to obtain at least one of a temperature change of the charging contacts 2, a current change of the detection circuit 6, or a voltage change of the detection circuit 6, to adjust a charging voltage. During automatic control detection in the charging process, two or three of a temperature of the charging contacts 2, a current of the detection circuit 6, and a voltage of the detection circuit 6 may also be obtained, so as to improve accuracy of detection and self-adjustment.

Therefore, the circuit structure shown in FIG. 7 may be adopted in the method for charging self-monitoring and the apparatus 50 for charging self-monitoring according to the present application. By means of proposing a fusion algorithm of the circuit design of charging detection and a multi-detection sensor solution, a design of a robot charging pile capable of performing safe self-monitoring is achieved with a customized automatic control principle, thereby solving the pain points of the robot charging pile, such as contact sparking, insecure charging, incapability of identifying an identity of a charging device, incapability of self-monitoring management, and the like. Moreover, by means of self-monitoring management in the charging process, a charging control solution is dynamically adjusted, such that different charging currents and voltages may be controlled in different scenarios.

A charging pile 100a according to embodiments of a third aspect of the present application may be provided thereon with the apparatus 50 for charging self-monitoring according to any one of the above-mentioned embodiments.

A charging robot 100b according to embodiments of a fourth aspect of the present application may be provided thereon with the apparatus 50 for charging self-monitoring according to any one of the above-mentioned embodiments.

A computer-readable storage medium according to embodiments of a fifth aspect of the present application has a computer program stored thereon, and the computer program, when executed by a processor, implements the method according to the above-mentioned embodiments.

A computer program product according to embodiments of a sixth aspect of the present application includes a computer program/instruction, and the computer program/instruction, when executed by a processor, implements the method for charging self-monitoring according to the first aspect of the present application.

It should be understood that the apparatus embodiments and the method embodiments may correspond to each other, and reference may be made to the method embodiments for similar descriptions. To avoid repetition, details are not described herein again. Specifically, the apparatus may execute the above-mentioned method embodiments, and the above-mentioned and other operations and/or functions of the modules in the apparatus are respectively corresponding processes in the methods in the above-mentioned method embodiments, which are not described herein again for the sake of brevity.

The apparatus according to the embodiments of the present application has been described above in terms of functional modules with reference to the drawings. It should be understood that the functional modules may be implemented in the form of hardware, software instructions, or a combination of hardware and software modules. Specifically, the steps of the method embodiments in the embodiments of the present application may be completed by integrated logic circuits of hardware in the processor and/or instructions in the form of software. The steps of the method applied in the embodiments of the present application may be directly embodied as being completed by a hardware decoder processor, or completed by a combination of hardware and software modules in the decoder processor. Optionally, the software modules may be located in mature storage media in the art, such as random access memory, flash memory, read-only memory, programmable read-only memory, electrically erasable programmable memory, and register. The storage medium is located in the memory, and the processor reads information in the memory and completes the steps in the above-mentioned method embodiments in combination with the hardware thereof.

FIG. 9 is a schematic block diagram of an electronic device according to an embodiment of the present application, and the electronic device may include:
a memory 404 and a processor 402, where the memory 404 is configured to store a computer program and transmit the program code to the processor 402. In other words, the processor 402 may invoke and run the computer program from the memory 404 to implement the method of the embodiments of the present application.

For example, the processor 402 may be configured to perform the above-mentioned method embodiments according to instructions in the computer program.

In some embodiments of the present application, the processor 402 may include, but is not limited to:
a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or other programmable logic devices, a discrete gate or transistor logic device, a discrete hardware component, and so on.

In some embodiments of the present application, the memory 404 includes, but is not limited to:
a volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random-access memory (Random Access Memory, RAM), which is used as an external cache. By way of example but not limitation, many forms of RAM are available, such as a static random-access memory (Static RAM, SRAM), a dynamic random-access memory (Dynamic RAM, DRAM), a synchronous dynamic random-access memory (Synchronous DRAM, SDRAM), a double data rate synchronous dynamic random-access memory (Double Data Rate SDRAM, DDR SDRAM), an enhanced synchronous dynamic random-access memory (Enhanced SDRAM, ESDRAM), a synch link dynamic random-access memory (synch link DRAM, SLDRAM), and a direct rambus random-access memory (Direct Rambus RAM, DR RAM).

In some embodiments of the present application, the computer program may be divided into one or more modules, the one or more modules are stored in the memory 404, and the one or more modules are executed by the processor 402, to complete the method provided by the present application. The one or more modules may be a series of computer program instruction segments capable of completing a specific function, and the instruction segments are used to describe an execution process of the computer program in the electronic device.

FIG. 9 is a schematic block diagram of an electronic device according to an embodiment of the present application. As shown in FIG. 9, the electronic device may further include:
a transceiver 403, and the transceiver 403 may be connected to the processor 402 or the memory 404.

The processor 402 may control the transceiver 403 to communicate with other devices. Specifically, the transceiver 403 may send information or data to other devices, or receive information or data sent by other devices. The transceiver 403 may include a transmitter and a receiver. The transceiver 403 may further include an antenna, and the number of the antenna may be one or more.

It should be understood that components in the electronic device are connected through a bus system, where the bus system includes a power bus, a control bus, and a status signal bus in addition to a data bus.

The present application further provides a computer storage medium on which a computer program is stored, where the computer program, when executed by a computer, enables the computer to execute the method according to the above-mentioned method embodiments. Alternatively, the embodiments of the present application further provide a computer program product including an instruction, where the instruction, when executed by a computer, enables the computer to execute the method according to the above-mentioned method embodiments.

When software is used for implementation, the method for charging self-monitoring may be implemented, in whole or in part, in the form of a computer program product. The computer program product includes one or more computer instructions. When the computer program instructions are loaded and executed on a computer, the processes or functions according to the embodiments of the present application are produced, in whole or in part. The computer may be a general-purpose computer, a special-purpose computer, a computer network, or other programmable devices. The computer instructions may be stored in a computer-readable storage medium, or may be transmitted from one computer-readable storage medium to another computer-readable storage medium. For example, the computer instructions may be transmitted from a website, a computer, a server or a data center to another website, computer, server or data center by means of wire (such as a coaxial cable, an optical fiber, a digital subscriber line (DSL)) or wireless (such as infrared, wireless, microwave, etc.). The computer-readable storage medium may be any available medium that may be accessed by the computer, or a data storage device such as a server, a data center, etc. integrating one or more available media. The available medium may be a magnetic medium (such as a floppy disk, a hard disk, a magnetic tape), an optical medium (such as a digital video disc (DVD)), or a semiconductor medium (such as a solid state disk (SSD)), etc.

Those of ordinary skill in the art may be aware that, the modules and algorithm steps of the various examples described in connection with the embodiments of the present application may be implemented by electronic hardware, or a combination of computer software and electronic hardware. Whether these functions are performed by hardware or software depends on specific applications and design constraints of the technical solutions. Professionals may use different methods to implement the described functions for each specific application, but such implementation should not be considered as exceeding the scope of the present application.

In the description of this specification, reference to the description of the term "embodiment", "example", etc. means that a specific feature, structure, material, or characteristic described in combination with the embodiment or example is included in at least one embodiment or example of the present application. In this specification, the schematic expression of the above term does not necessarily refer to the same embodiment or example. Moreover, the specific features, structures, materials, or characteristics described may be combined in any suitable manner in one or more embodiments or examples.

Although the embodiments of the present application have been shown and described, those of ordinary skill in the art may understand that various changes, modifications, substitutions and variations may be made to these embodiments without departing from the principle and purpose of the present application. The scope of the present application is defined by the claims and their equivalents.

## Claims

1. A method for charging self-monitoring, **characterized by** comprising:
S1, obtaining a relative position of a charging robot with respect to a charging pile, and adjusting a position of the charging robot according to the relative position until charging contacts between the charging robot and the charging pile are in position;
S2, obtaining identity information, performing impedance detection on the charging contacts, and determining the identity information based on an impedance detection result; and
S3, starting the charging.

2. The method according to claim 1, **characterized in that**: a step S2' is further comprised between the step S2 and the step S3: S2', performing the impedance detection on a charging path between the charging pile and the charging robot to obtain a difference between an actual resistance of the charging path and a rated resistance of the charging path.

3. The method according to claim 2, **characterized in that** the charging path is connected to a detection circuit for the charging self-monitoring;
in the step S2, outputting a first adjustment voltage to the detection circuit, obtaining a resistance value of a sampling resistor in the detection circuit, and determining the identity information; and
in the step S2', outputting a second adjustment voltage to the detection circuit, obtaining a sampling voltage of the sampling resistor in the detection circuit, and calculating a voltage difference of the charging path to obtain the difference between the actual resistance of the charging path and the rated resistance of the charging path.

4. The method according to claim 3, **characterized in that** the first adjustment voltage is lower than the second adjustment voltage.

5. The method according to claim 2, **characterized in that** in the step S3, the charging is performed by outputting a third adjustment voltage to the detection circuit; and
the second adjustment voltage output to the detection circuit in the step S2' is lower than the third adjustment voltage output to the detection circuit after the charging is started in the step S3.

6. The method according to any one of claims 1 to 5, **characterized in that** the charging contacts are connected to the detection circuit, and the step S3 further comprises at least one of:
S31: obtaining a temperature change of the charging contacts and adjusting a charging voltage for the charging robot;
S32: obtaining a current change of the detection circuit and adjusting the charging voltage for the charging robot; or
S33: obtaining a voltage change of the detection circuit and adjusting the charging voltage for the charging robot.

7. An apparatus for charging self-monitoring, **characterized by** comprising:
a position detection module, configured to obtain a relative position of a charging robot with respect to a charging pile;
a contact judgment module, configured to detect whether charging contacts between the charging robot and the charging pile are in position; and
an identity verification module, configured to perform impedance detection on the charging contacts docked between the charging robot and the charging pile, and obtain an impedance detection result to determine identity information.

8. The apparatus according to claim 7, further comprising:
a pre-charging module, configured to perform impedance detection on a charging path between the charging pile and the charging robot to obtain a difference between an actual resistance of the charging path and a rated resistance of the charging path.

9. The apparatus according to claim 8, **characterized in that** the identity verification module outputs a first adjustment voltage to the detection circuit, obtains a resistance value of a sampling resistor in the detection circuit, and determines the identity information; and
the pre-charging module outputs a second adjustment voltage to the detection circuit, obtains a sampling voltage of the sampling resistor in the detection circuit, and calculates a voltage difference of the charging path to obtain the difference between the actual resistance of the charging path and the rated resistance of the charging path.

10. The apparatus according to any one of claims 7 to 9, further comprising a charging self-adjustment module, configured to obtain at least one of a temperature change of the charging contacts, a current change of the detection circuit for the charging self-monitoring, or a voltage change of the detection circuit, to adjust a charging voltage.

11. A charging pile, **characterized in that** the apparatus for charging self-monitoring according to any one of claims 7 to 10 is disposed thereon.

12. A charging robot, **characterized in that** the apparatus for charging self-monitoring according to any one of claims 7 to 10 is disposed thereon.

13. A computer-readable storage medium, storing a computer program thereon, **characterized in that** the computer program, when executed by a processor, implements the method for charging self-monitoring according to any one of claims 1 to 6.

14. A computer program product, comprising a computer program/instruction, **characterized in that** the computer program/instruction, when executed by a processor, implements the method for charging self-monitoring according to any one of claims 1 to 6.

15. An electronic device, **characterized by** comprising:
a processor; and
a memory, configured to store executable instructions of the processor;
wherein the processor is configured to implement the method according to any one of claims 1 to 6 by executing the executable instructions.
